# EUROPEAN PATENT SPECIFICATION

(11) **EP 1 898 598 B1**
(45) Date of publication and mention of the grant of the patent: **02.03.2016**
(21) Application number: 06291415.5
(22) Date of filing: 05.09.2006
(51) Int. Cl.: H04L 29/08, H04M 1/725

(54) **Smart artefact and user terminal having a short range interface and long range interface**
Vorrichtung und Benutzerendgerät mit einer kurz- und einer langreichweitigen Schnittstelle
Dispositif et terminal d'utilisateur avec interface à courte portée et interface à longue portée

(43) Date of publication of application: 12.03.2008
(73) Proprietor: ALCATEL LUCENT, 92100 Boulogne-Billancourt (FR)
(72) Inventor: Trappeniers, Lieven Leopold Albertine, 2200 Herentals (Noorderwijk) (BE); Godon, Marc Bruno Frieda, 1840 Londerzeel (BE)
(74) Representative: ALU Antw Patent Attorneys

(56) References cited:
- EP-A- 1 622 346
- WO-A-2004/003801
- US-A1- 2003 088 496
- US-A1- 2004 203 352
- US-A1- 2006 071 778
- PENTTILA K ET AL: "Use and interface definition of mobile RFID reader integrated in a smart phone" CONSUMER ELECTRONICS, 2005. (ISCE 2005). PROCEEDINGS OF THE NINTH INTERNATIONAL SYMPOSIUM ON MACAU SAR 14-16 JUNE 2005, PISCATAWAY, NJ, USA,IEEE, 14 June 2005 (2005-06-14), pages 353-358, XP010832175 ISBN: 0-7803-8920-4

## Description

### Field of the Invention

The present invention generally relates to interactive sessions between smart artefacts, e.g. public displays, whiteboards or billboards, and user terminals such as mobile phones, PDAs, laptops, etc. Such interactive sessions enable downloading content to the user terminal, like a word, event date, a number, photo, drawing, ring tone, game, a video, an URL, etc., or enable controlling the information that is made accessible or visible through the smart artefact.

### Background of the Invention

One way to categorize prior art interactive artefacts and user terminals is to distinguish between solutions with plural zones of interaction and solutions with a single zone of interaction.

GossipWall and ViewPort, described in the article "Situated Interaction with Ambient Information: Facilitating Awareness and Communication in Ubiquitous Work Environments" from the authors Norbert Streitz, Carsten Rocker, Thorsten Prante, Richard Stenzel and Daniel van Alphen, for instance describes an artefact with sensing technology, i.e. the GossipWall display, and a user terminal with sensing technology, i.e. the ViewPort device, which interact in three zones depending on the distance of the ViewPort from the GossipWall: the Interactive zone, the Notification zone, and the Ambient zone. The GossipWall thereto includes two independent RFID sensors that sense presence of a ViewPort device respectively within the Interactive zone and the Notification zone. When a ViewPort device is sensed within the Interactive zone, interaction becomes possible with each independent pixel or cell of the GossipWall display. When a ViewPort device is sensed within the Notification zone, the GossipWall can "borrow" the ViewPort device and use it to provide personal information to the user, e.g. information relating to the patterns displayed on the GossipWall. When a ViewPort device passes outside the Interactive or Notification zones, i.e. in the Ambient zone where it is not sensed, the GossipWall display shall show general information and no interaction is possible. A more detailed explanation of GossipWall and ViewPort can be found in the above cited article which is downloadable from the Internet via the following URL:
http://www.ipsi.fraunhofer.de/ambiente/paper/2003/HCII-2003-Streitz.et.al.-final.pdf

A similar system is Hello.Wall, another wall-sized ambient display that interacts with user terminals such as the ViewPort depending on the distance from the individual holding the user terminal to the wall. Hello.Wall is described in a publication entitled "Ambient Agoras - InfoRiver, SIAM, Hello.Wall" from Thorsten Prante et. al., downloadable via URL:
http://www.ipsi.fraunhofer.de/ambiente/paperl2004/AmbientAgoras-CHl04-prante.pdf
and in a second Internet publication entitled "Ambient Agoras" that is accessible through URL:
http://www.ipsi.fraunhofer.de/ambiente/material/pictures/

A drawback of the above described solutions based on plural interaction zones, is that an interactive session between the smart artefact and the user terminal cannot be conveyed from one zone to another. Upon entrance of a new zone, the interaction mode between the user terminal and artefact will change automatically.

Another disadvantage of the known prior art systems is that there is no explicit selection by the user of the artefact to interact with. As soon as the user terminal is within a certain proximity of the artefact, interaction is established automatically. Even if the ViewPort user is only passing by and doesn't wish to interact with the smart display, the GossipWall will detect presence of the ViewPort device and automatically select It for interaction, resulting for instance in general information being replaced with personal information on the display.

The lack of explicit selection becomes even more disturbing in a scenario where many smart artefacts are around. Depending on the respective distances to the user terminal, all these artefacts may start interacting with the user terminal, whereas the user only prefers to select a specific one.

US 2004/0203352 entitled "System and Method for Wireless Data Transfer for a Mobile Unit" describes communication between a mobile device and a base unit. Communication parameters are exchanged between the device and base unit after a wake-up communication from the base unit via RFID. Thereafter, a wireless connection is established between the device and base unit using the communication parameters. Although the device and base unit in US 2004/0203352 have short range (RFID) and long range (wireless) interfaces, there is no initiation of a short range session that is ported outside the short range zone. The short range session is only established to exchange signalling or connection parameters between the device and base unit (see [0029]). The wireless connection is established separately thereafter (see [0031]). In addition, there is no explicit selection by the user of the base station. It is the base station that takes the initiative through an RFID wake-up communication when a compatible device is detected within the vicinity of 1-100 metres (see [0028]). The base station also does not constitute an artefact within the meaning of the present invention.

US 2006/0071778 entitled "Methods, Systems, Devices and Computer Program Products for Providing Dynamic Product Information in Short-Range Communications" describes a system wherein RFID is used for transferring product specific information from a tag to a mobile terminal. As is indicated by [0010], the information received from the RFID tag may then be used to initiate a communication with network resource to retrieve further information. Again, there is no short range communication that is ported outside the short range zone. A first, short range communication is between the RFID tag and mobile terminal. A second, long range session between the mobile terminal and an information source in the network has to be initiated separately.

A similar system wherein product identification information is obtained from an RFID tag, and wireless data transmission with a source reachable through GSM, GPRS or the like is used to collect more detailed product info is described in the article "Use and Interface Definition of Mobile RFID Reader Integrated in a Smart Phone" from the authors Katariina Penttila et al. The product that is tagged does not represent a smart artefact within the meaning of the present invention, and the mobile terminal needs dedicated application software.

Yet another comparable system is described in US 2003/0088496 entitled "Tag Processing Terminal for Facilitating Competitive Internet Bid Transactions". Herein, product identification info is read from an RFID tag, and thereafter used in a separate Internet session to collect information on competitive products and their pricing.

Also EP 1 662 346 entitled "RFID-Reader kompatibles Mobiltelefon: RFID-vermittelter Datentransfer auf Mobiltelefon und konsekutiver mobile/ubiquitous Commerce" describes receiving product identification info from an RFID tag in a mobile phone, and afterwards using the product identification in a separate Internet or SMS session to order the product.

International Patent Application WO 2004/003801 entitled "System, Apparatus, and Method for Effecting Network Connections via Wireless Devices Using Radio Frequency Identification" describes a system wherein applications or services can be initiated from a mobile terminal after touching an RFID tag that contains information such as an URL associated with the application or service. Just like with the above examples where product identification information is obtained from an RFID tag, there is no portability of the connection established with the RFID tag outside the zone covered by the RFID transceivers. The information received from the RFID tag is only used to initiate a separate communication session, e.g. over the Internet, with a different information source.

An example prior art system with only one interaction zone is Polyvision's Walk-and-Talk Lightning interactive whiteboard that is accompanied by a user terminal, i.e. the Walk-and-Talk board that serves as intuitive remote control and allows projecting, writing, erasing, saving, and printing the whiteboard presentation, as well as accessing the web. The Walk-and-Talk Lightning interactive whiteboard is advertised at the following URL:
http://www.polyvision.com/media/product_sheets/Walk-and-Talk-Lightning-Product-Sheet.pdf

Another single zone interactive artefact may be realized through the Hypertag, which is a small electronic tag that is attached to an advert or public sign enabling infra-red or Bluetooth based mobile phones and PDAs to interact with the tagged poster panel, billboard, etc. and download a phone number, reminder prompt, a game, a logo, a picture, a ring-tone, etc. The Hypertag platform is advertised at:
http://www.hypertag.com/

Although the selection may be more explicit, e.g. a Bluetooth connection may have to be established and authenticated between the user terminal and the public artefact, the single zone solutions enabling interaction between a smart artefact and a user terminal still suffer from the drawback that an interactive session between terminal and artefact cannot be ported outside the short range zone wherein the session is initiated, e.g. through Bluetooth or line of sight connectivity such as infra-red interfaces.

It is an object of the invention to provide a smart artefact and user terminal that overcomes the above listed shortcomings of prior art solutions. In particular, it is an objective to disclose a smart artefact and user terminal that are able to extend an interactive session beyond predefined zones. Further, it is an objective to enable explicit selection of the smart artefact(s) with whom a user terminal enters into an interactive session, in particular in the vicinity of plural smart artefacts.

### Summary of the Invention

According to the invention, the above object is realized and the shortcomings of the prior art solutions are overcome by the smart artefact defined in claim 1, having
first interfacing means, active within a first short range, for initiating an interactive session with a user terminal,
second interfacing means, active within a second longer range, and
handover means for transferring the interactive session from the first interfacing means towards the second interfacing means for continuing the interactive session with the user terminal through the second interfacing means,
the first interfacing means containing haptic or tactile aspects requiring the user terminal to touch the smart artefact to initiate the interactive session.

Thus, by initiating a session through a first, short range interface, through touching the artefact with an adapted user terminal, and by transferring the session from a first interface to a second interface, e.g. through handover of the session to a long range RF interface, the interactive communication between the artefact and the user terminal is extended beyond the zone wherein the first, short range interface is active. In addition, the short range interface establishes a means for explicit selection of the artefact in a clear and intuitive way since the first interface contains haptic or tactile aspects requiring the user to touch the artefact in order to initiate the interaction.

The current invention in addition relates to a user terminal as defined in claim 4, having:
first interfacing means, active within a first short range, for initiating an interactive session with a smart artefact,
second interfacing means, active within a second longer range, and
handover means for transferring the interactive session from the first interfacing means towards the second interfacing means for continuing the interactive session with the smart artefact through the second interfacing means,
the first interfacing means containing haptic or tactile aspects requiring the user terminal to touch the smart artefact to initiate the interactive session.

Such a user terminal is able to enter into interactive sessions with the smart artefact defined in claim 1 in a way as described above. The handover between the short range interface and the long range interface may be user terminal controlled or user terminal assisted when a mobility proxy performs network controlled handover between the interfaces. The handover for instance may consist in authenticating with the long range communication network or service whilst being connected with the smart artefact over the short range interface, simultaneously performing a packet data session establishment procedure over the long range interface in the user terminal and the smart artefact whilst remaining connected over the short range interface, and exchanging parameters between the two interfaces in the user terminal and smart artefact. The exchange of parameters may for instance involve assistance of a mobility proxy, like a mobility SIP (Session Initiation Protocol) proxy that transports the parameters according to the SHP (Session Handover Protocol), a residual protocol of SIP that transports the parameters as attachments to SIP messages.

As is indicated by claim 2, the first, short range interfacing means may optionally be a touch-based interface, a Radio Frequency Identification (RFID) tag, a Radio Frequency Identification (RFID) tag reader, a barcode, a barcode scanner, a shotcode, a shotcode scanner, a Uniform Resource Locator (URL), a Uniform Resource Locator (URL) reader, a Near Field Communication (NFC) interface, an infrared interface, a Bluetooth interface, or the like.

As is indicated by claim 3, the second, long range interfacing means may optionally be a Bluetooth interface or IEEE 802.15 interface, a Wireless Local Area Network (WLAN) interface, a Wireless Fidelity (WiFi) interface or IEEE 802.11 interface, a Worldwide Interoperability for Microwave Access (WiMAX) interface or IEEE 802.16 interface, a Wireless Broadband (WiBro) interface, a HomeRF interface, a Global System for Mobile communications (GSM) interface, a Wireless Application Protocol (WAP) interface, a Universal Mobile Telephone System (UMTS) interface, or the like.

### Brief Description of the Drawings

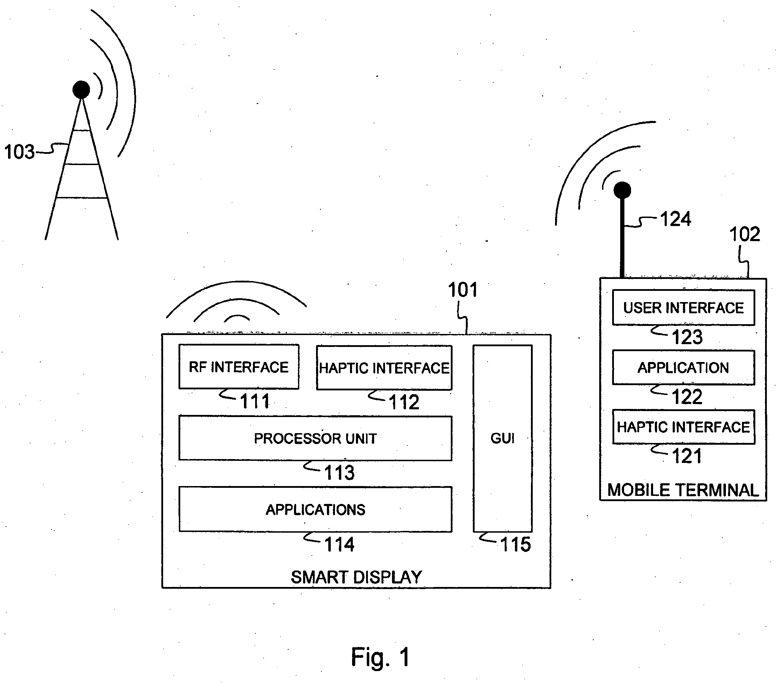

Fig. 1 illustrates an embodiment of the artefact and user terminal according to the present invention.

### Detailed Description of Embodiment(s)

Fig. 1 shows a smart public display 101, a mobile user terminal 102, and a base transceiver station 103 of a mobile network.

The smart display 101 contains an RF interface 111, a haptic interface 112, a processor unit 113, application logic 114 and a graphical user interface 115. The mobile user terminal 102 has a haptic interface 121, application logic 122, a user interface 123 and an RF interface 124. The RF interfaces in the smart display 111 and user terminal 124 can be an interface for GSM, GPRS, UMTS, Bluetooth, WiFi, etc.

When the user of the mobile terminal 102 touches with the haptic interface 121 the corresponding haptic interface 112 of the smart display 101, a short range interactive session is established between the smart display 101 and user terminal 102 and the mobile user terminal 102 becomes associated to the smart display 101.

Once the association is made between the mobile terminal 102 and the smart display 101, the user of the mobile terminal 102 may start walking around. The interactive session with the smart display 101 will be kept, even when the user is out of sight, since the session will be handed over from the haptic interface 112 to the RF interface 111, which is a long range interface that communicates with the RF interface 124 of the mobile terminal 102 via the mobile network represented by the base transceiver station 103 in Fig. 1. Also in the mobile user terminal 102, the interactive session is transferred from the haptic interface 121 to the RF interface 124, and this in synchronism with the handover in the smart display 101. From this moment on, the smart display 101 and the user terminal 102 are engaged in a long range communication session, and the interaction takes place over RF. An application, e.g. of the client-server type like fetching a movie trailer, posting text, sharing the graphical user Interface between the user terminal and the smart display, etc. will run over the established interactive communication session, and the user is able to maintain the interactive session, for instance even till he has returned to his/her home or his/her office.

Thanks to the invention, the user of the mobile terminal 102 is offered a clear and intuitive way of entering into an interactive session with the smart display 101. The user can select a smart display from a multiple of displays within his vicinity by simply touching the selected display with the mobile terminal 102, and is able to extend the interaction zone to infinity (e.g. take the interactive session with the smart display home). The invention introduces natural, tactile or haptic aspects in the interaction with smart artefacts, and solves the privacy issue when interacting with public artefacts, like public displays or billboards that according to prior art solutions would automatically interact with the passing user terminal and eventually display personal, private information.

Although the user terminal 102 and the smart display 101 in Fig. 1 are equipped with a haptic or touch-based interface, any short range interface or sensing technology like RFID, infrared, Bluetooth, barcode reading, etc. could be a viable alternative for associating a user terminal with the smart display and establishing an interactive session there between.

A further remark is that the smart display 101 and the mobile phone 102 of Fig. 1 are only examples of the smart artefact and the user terminal according to the present invention. Other examples of smart artefacts are billboards, whiteboards, ambient walls, tables etc. Other examples of user terminals are PDA (Personal Digital Assistants), laptops, remote control devices, etc.

Yet another remark is that long range communication via an RF connection through a base transceiver station was only given as example. The skilled technician will appreciate that variants of the present invention may employ long range communication through hotspots (e.g. WiFi), or through other wireless terminals (e.g. WiFi in ad-hoc mode) in the neighbourhood.

It is also noticed that the smart display, or more generally the smart artefact, and user terminal according to the present invention may comprise more than one short range interface, and more than one long range interface. Plural interfaces increase the chance for compatibility, and the chance to successfully establish an interactive session when for instance one of the interfaces fails. In such case where the user terminal or smart artefact contains plural short range interfaces and/or plural long range interfaces, the terminal or artefact preferably is also equipped with handover means that enable to transfer an interactive communication session from any available short range interface to any available long range interface. When plural long range interfaces are available, the user terminal and smart artefact possibly agree upon the long range communication means that will be used to maintain the interactive session. This may be done during a negotiation cycle.

Although the present invention has been illustrated by reference to specific embodiments, it will be apparent to those skilled in the art that the invention is not limited to the details of the foregoing illustrative embodiments, and that the present invention may be embodied with various changes and modifications without departing from scope thereof. The present embodiments are therefore to be considered in all respects as illustrative and not restrictive, the scope of the invention being defined by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A smart artefact (101) having first interfacing means (112), active within a first range, for initiating an interactive session with a user terminal (102), and second interfacing means (111), active within a second range that extends beyond said first range,
**CHARACTERIZED IN THAT** said smart artefact (101) further has:
handover means for transferring said interactive session from said first interfacing means (112) towards said second interfacing means (111) for continuing said interactive session with said user terminal (102) through said second interfacing means (111); and further **in that**:
said first interfacing means (112) contain haptic or tactile aspects requiring said user terminal (102) to touch said smart artefact (101) to initiate said interactive session.

2. A smart artefact (101) according to claim 1,
**CHARACTERIZED IN THAT** said first interfacing means (112) are an instantiation of one or more of:
a touch-based interface;
a Radio Frequency Identification (RFID) tag;
a Radio Frequency Identification (RFID) tag reader;
a barcode;
a barcode scanner;
a shotcode;
a shotcode scanner;
a Uniform Resource Locator (URL);
a Uniform Resource Locator (URL) reader;
a Near Field Communication (NFC) interface;
an infrared interface;
a Bluetooth interface.

3. A smart artefact (101) according to claim 1,
**CHARACTERIZED IN THAT** said second interfacing means (111) are an instantiation of one or more of:
a Bluetooth interface or IEEE 802.15 interface;
a Wireless Local Area Network (WLAN) interface;
a Wireless Fidelity (WiFi) interface or IEEE 802.11 interface;
a Worldwide Interoperability for Microwave Access (WiMAX) interface or IEEE 802.16 interface;
a Wireless Broadband (WiBro) interface;
a HomeRF interface;
a Global System for Mobile communications (GSM) interface;
a Wireless Application Protocol (WAP) interface;
a Universal Mobile Telephone System (UMTS) interface.

4. A user terminal (102) having first interfacing means (121), active within a first range, for initiating an interactive session with a smart artefact (101), and second interfacing means (124), active within a second range that extends beyond said first range,
**CHARACTERIZED IN THAT** said user terminal (102) further has:
handover means for transferring said interactive session from said first interfacing means (121) towards said second interfacing means (124) for continuing said interactive session with said smart artefact (101) through said second interfacing means (124); and further **in that**:
said first interfacing means (124) contain haptic or tactile aspects requiring said user terminal (102) to touch said smart artefact (101) to initiate said interactive session.

## Patentansprüche

1. Intelligentes Artefakt (101) mit ersten Schnittstellenmitteln (112), die innerhalb eines ersten Bereichs aktiv sind, zum Veranlassen einer interaktiven Sitzung mit einem Benutzerendgerät (102), und zweiten Schnittstellenmitteln (111), die innerhalb eines zweiten Bereichs aktiv sind, der sich über den besagten ersten Bereich hinaus erstreckt,
**DADURCH GEKENNZEICHNET, DASS** das besagte intelligente Artefakt (101) weiterhin Folgendes aufweist:
Übergabemittel zum Übertragen der besagten interaktiven Sitzung von den besagten ersten Schnittstellenmitteln (112) an die besagten zweiten Schnittstellenmittel (111) zum Fortsetzen der besagten interaktiven Sitzung mit dem besagten Benutzerendgerät (102) über die besagten zweiten Schnittstellenmittel (111); und weiterhin dadurch, dass:
die besagten ersten Schnittstellenmittel (112) haptische oder taktile Aspekte umfassen, die ein Berühren des besagten intelligenten Artefakts (101) durch das besagte Benutzerendgerät (102) erfordern, um die besagte interaktive Sitzung zu veranlassen.

2. Intelligentes Artefakt (101) nach Anspruch 1,
**DADURCH GEKENNZEICHNET, DASS** die besagten ersten Schnittstellenmittel (112) eine Instanziierung sind von einem oder mehreren aus:
berührungsbasierter Schnittstelle;
Radiofrequenzidentifikations-(RFID)-Tag;
Radiofrequenzidentifikations-(RFID)-Tag-Leser;
Barcode;
Barcode-Scanner;
Shotcode;
Shotcode-Scanner;
einheitlichem Ressourcenanzeiger (URL);
einheitlichem Ressourcenanzeiger-(URL)-Leser;
Nahfeldkommunikations-(NFC)-Schnittstelle;
Infrarotschnittstelle;
Bluetooth-Schnittstelle.

3. Intelligentes Artefakt (101) nach Anspruch 1,
**DADURCH GEKENNZEICHNET, DASS** die besagten zweiten Schnittstellenmittel (111) eine Instanziierung sind von einem oder mehreren aus:
Bluetooth-Schnittstelle oder IEEE 802.15-Schnittstelle;
Schnittstelle für ein drahtloses lokales Netzwerk (WLAN);
Wireless Fidelity-(WiFi)-Schnittstelle oder IEEE 802.11-Schnittstelle;
Schnittstelle für Worldwide Interoperability for Microwave Access (WiMAX) oder
IEEE 802.16-Schnittstelle;
Wireless Broadband-(WiBro)-Schnittstelle;
HomeRF-Schnittstelle;
Schnittstelle für Global System for Mobile communications (GSM);
Schnittstelle für Wireless Application Protocol (WAP);
Schnittstelle für Universal Mobile Telephone System (UMTS).

4. Benutzerendgerät (102) mit ersten Schnittstellenmitteln (121), die innerhalb eines ersten Bereichs aktiv sind, zum Veranlassen einer interaktiven Sitzung mit einem intelligenten Artefakt (101), und zweiten Schnittstellenmitteln (124), die innerhalb eines zweiten Bereichs aktiv sind, der sich über den besagten ersten Bereich hinaus erstreckt,
**DADURCH GEKENNZEICHNET, DASS** das besagte Benutzerendgerät (102) weiterhin Folgendes aufweist:
Übergabemittel zum Übertragen der besagten interaktiven Sitzung von den besagten ersten Schnittstellenmitteln (121) an die besagten zweiten Schnittstellenmittel (124) zum Fortsetzen der besagten interaktiven Sitzung mit dem besagten intelligenten Artefakt (101) über die besagten zweiten Schnittstellenmittel (124); und weiterhin dadurch, dass:
die besagten ersten Schnittstellenmittel (124) haptische oder taktile Aspekte umfassen, die ein Berühren des besagten intelligenten Artefakts (101) durch das besagte Benutzerendgerät (102) erfordern, um die besagte interaktive Sitzung zu veranlassen.

## Revendications

1. Artefact intelligent (101) comprenant des premiers moyens d'interfaçage (112), actifs au sein d'une première plage, destinés à initier une session interactive avec un terminal d'utilisateur (102), et des deuxièmes moyens d'interfaçage (111), actifs au sein d'une deuxième plage qui s'étend au-delà de ladite première plage,
**CARACTÉRISÉ EN CE QUE** ledit artefact intelligent (101) comprend en outre :
des moyens de transfert pour transférer ladite session interactive desdits premiers moyens d'interfaçage (112) vers lesdits deuxièmes moyens d'interfaçage (111) pour poursuivre ladite session interactive avec ledit terminal d'utilisateur (102) au travers desdits deuxièmes moyens d'interfaçage (111) ; et en outre **en ce que** :
lesdits premiers moyens d'interfaçage (112) contiennent des aspects sensoriels ou tactiles imposant audit terminal d'utilisateur (102) de toucher ledit artefact intelligent (101) pour initier ladite session interactive.

2. Artefact intelligent (101) selon la revendication 1,
**CARACTÉRISÉ EN CE QUE** lesdits premiers moyens d'interfaçage (112) sont une instanciation d'un ou plusieurs des éléments suivants :
une interface tactile ;
une balise d'identification par radiofréquence (RFID) ;
un lecteur de balise d'identification par radiofréquence (RFID) ;
un code à barres ;
un lecteur de code à barres ;
un code à barres 2D ;
un lecteur de code à barres 2D ;
un localisateur uniforme de ressource (URL) ;
un lecteur de localisateur uniforme de ressource (URL) ;
une interface de communication de champ proche (NFC) ;
une interface à infrarouges ;
une interface Bluetooth.

3. Artefact intelligent (101) selon la revendication 1,
**CARACTÉRISÉ EN CE QUE** lesdits deuxièmes moyens d'interfaçage (111) sont une instanciation d'un ou plusieurs des éléments suivants :
une interface Bluetooth ou une interface IEEE 802.15 ;
une interface de réseau local sans fil (WLAN) ;
une interface à fidélité sans fil (WiFi) ou une interface IEEE 802.11 ;
une interface d'interopérabilité mondiale des accès d'hyperfréquence (WiMax) ou une interface IEEE 802.16 ;
une interface large bande sans fil (WiBro) ;
une interface RF résidentielle ;
une interface de système mondial de communications mobiles (GSM) ;
une interface de protocole d'application sans fil (WAP) ;
une interface de système de téléphonie mobile universelle (USTM).

4. Terminal d'utilisateur (102) comprenant des premiers moyens d'interfaçage (121), actifs au sein d'une première plage, destinés à initier une session interactive avec un artefact intelligent (101), et des deuxièmes moyens d'interfaçage (124), actifs au sein d'une deuxième plage qui s'étend au-delà de ladite première plage,
**CARACTÉRISÉ EN CE QUE** ledit terminal d'utilisateur (102) comprend en outre :
des moyens de transfert pour transférer ladite session interactive desdits premiers moyens d'interfaçage (121) vers lesdits deuxièmes moyens d'interfaçage (124) pour poursuivre ladite session interactive avec ledit artefact intelligent (101) au travers desdits deuxièmes moyens d'interfaçage (124) ; et en outre **en ce que** :
lesdits premiers moyens d'interfaçage (124) contiennent des aspects sensoriels ou tactiles imposant audit terminal d'utilisateur (102) de toucher ledit artefact intelligent (101) pour initier ladite session interactive.
